# EUROPÄISCHE PATENTSCHRIFT

(11) **EP 0 825 375 B1**
(45) Veröffentlichungstag und Bekanntmachung des Hinweises auf die Patenterteilung: **08.05.2002**
(21) Anmeldenummer: 97101847.8
(22) Anmeldetag: 06.02.1997
(51) Int. Cl.: F16L 33/22

(54) **Schlauchanschlussverschraubung**
Hose screw connection
Raccord à vis pour tuyaux souples

(30) Priorität: 23.08.1996 DE 19634037
(43) Veröffentlichungstag der Anmeldung: 25.02.1998
(73) Patentinhaber: Renus Armaturen GmbH, 63674 Altenstadt (DE)
(72) Erfinder: Kurz, Reinhard, 61130 Nidderau (DE)
(74) Vertreter: Wolf, Günter, Dipl.-Ing.

(56) Entgegenhaltungen:
- DE-B- 1 072 028
- DE-U- 29 605 218
- FR-A- 1 496 737
- GB-A- 960 436
- GB-A- 190 917 133
- US-A- 3 167 331

## Beschreibung

Die Erfindung betrifft eine Schlauchanschlußverschraubung gemäß Oberbegriff des Anspruches 1.

Derartige Schlauchanschlußverschraubungen sind bspw. nach DE-U-18 24 206 und DE-U-296 05 218 bekannt, aber auch nach D-A-1 072 028 sowie GB-A-960 436. Bei den Spannelementen dieser bekannten Anschlußverschraubung handelt es sich um zu Ringen gebogene Schraubendruckfedern, die nachfolgend kurz als Ringfeder bezeichnet werden. Diesen bekannten Schlauchanschlußverschraubungen liegt allen gemeinsam das Prinzip zugrunde, mittels eines in der Verschraubung angeordneten Innenkonus die das eingeschobene Schlauchende umfassende Ringfeder radial gegen den Schlauch zu verspannen und diesen dadurch am in den Schlauch eingesteckten Tüllenrohr direkt festzupressen. Das in das Schlauchende einzusteckende Tüllenrohr nach DE-U-18 24 206 ist dabei mit Flachnuten versehen, die allerdings mit abgerunfeten Kantenrändern in die ansonsten zylindrisch glatte Umfangsfläche des Tüllenrohres übergehen. Obgleich diese Vorschläge bereits aus den 50er/60er-Jahren stammen und an sich ein ideales und einfaches Fixierungsprinzip darstellen, haben sich diese Schlauchanschlußverschraubungen, soweit bekannt, nicht auf den Markt einführen bzw. auf dem Markt halten können, sofern sie überhaupt jemals auf den Markt gekommen und gewerblich verwertet worden sind. Dies scheint insofern erklärlich, als Versuche aus jüngster Zeit (siehe DE-U-296 05 218) gezeigt haben, daß einerseits tatsächlich keine ausreichende Dichtheit der Schlauchanschlüsse zu erreichen ist und andererseits die Schlauchenden wegen Verkeilung nicht ohne weiteres von der Schlauchanschlußverschraubung wieder abzuziehen sind, wobei noch hinzukommt, daß die Ringfedern nach den obengenannten Druckschriften ausschließlich mit einem radialen Spannvorgang gegen den Schlauch verspannt werden, was bedeutet, daß man trotz Gewindeverschraubung sehr schnell auf radialen Widerstand des Schlauchmaterials stößt und kein sicheres Gefühl entsteht, ob das Schlauchende tatsächlich ausreichend fest an dem Tüllenrohr angelegt ist. Die vorerwähnten, bei der Schlauchanschlußverschraubung nach DE-U-18 24 206 vorgesehenen Flachnuten tragen, wie sich gezeigt hat, aufgrund ihrer gerundeten Nutkanten nicht zur Dichtheit bei und sollen offenbar in Übernahme der sonst üblichen, sheddachartigen Rundumprofilierung an Tüllenrohren Gewähr nur für die Abzugssicherheit des unter Druck stehenden Schlauches leisten. Bei all diesen vorbekannten Schlauchanschlußverschraubungen ist man offensichtlich immer davon ausgegangen, daß per Flächenpressung mit der Fixierung des Schlauches am eingeschobenen Tüllenrohr auch automatisch ausreichende Dichtheit gewährleistet ist, zumal durch die Orientierung des Innenkonus (divergierend in Schlaucheinschubrichtung) man offenbar meinte, zunächst einmal davon ausgehen zu können, daß sich bei Abzugstendenz des Schlauches das eigentliche Spannelement (Ringfeder) immer fester keilt und dadurch abzugshindernde Profilierungen am Tüllenrohr sogar entbehrlich schienen (siehe DE-A-1 072 038 und GB-A-960 436). FR-A-1 496 737 zeigt auch eine naheliegende Schlauchanschlußverschraubung.

Der Erfindung liegt demgemäß die Aufgabe zugrunde, eine Schlauchanschlußverschraubung der eingangs genannten Art dahingehend zu verbessern, daß das Schlauchanschlußende gleichermaßen komplikationslos auf das Tüllenrohr aufschieb- und auch abziehbar und die radiale Durchmesserreduzierung der Ringfeder durch dessen axiale Verstellung bewirkbar ist, verbunden mit der Maßgabe, die Flachnut so zu gestalten und anzuordnen, daß im Dichtbereich der Schlauch bei durchmesserreduzierter Ringfeder nicht nur flächig, sondern längs mindestens zweier Kreisumfangslinien mit Linienpressung am Tüllenrohr gehalten wird.

Diese Aufgabe ist mit einer Schlauchanschlußverschraubung der eingangs genannten Art nach der Erfindung durch die im Kennzeichen des Anspruches 1 angegebene Merkmalskombination gelöst. Vorteilhafte Weiterbildungen ergeben sich nach den Unteransprüchen.

Die Maßgabe der Ausbildung der Flachnut mit "mindestens" zwei scharfen Kanten berücksichtigt Folgendes:
Einerseits gibt es Schläuche, und dies sind insbesondere Förderschläuche bspw. zur Silobeschickung, die praktisch immer gleiche Wandstärke haben. Für solche Schläuche liegt aber trotz Axialverstellung der Ringfeder deren Endanpreßstellung zum Schlauch fest, d.h. für solche Fälle kann eine entsprechend breit bemessene Flachnut mit scharfen Kanten genau an dieser Stelle des Tüllenrohres angeordnet werden, was wiederum bedeutet, daß beide scharfen Kanten mit Sicherheit als Linienpreßkanten zur Wirkung kommen. Anders liegen die Verhältnisse bspw. bei weniger anspruchsvollen Gartenschläuchen, die bei gleichem Innendurchmesser relativ starke Abweichungen in der Wandstärke haben können. Bei solchen Schläuchen, die in der Regel auch elastischer sind als die oben erwähnten Industrieschläuche, liegt also die tatsächliche Endanpreßstellung der Ringfeder nicht fest, d.h. es muß dafür gesorgt werden, daß trotzdem immer zwei Kanten zur Wirkung kommen, und zwar egal in welchem Teil des axialen Verstellbereiches der Ringfeder diese am Schlauch zur Anlage kommt. Zu verwirklichen ist dies einfach durch Aufgliederung und Ausbildung der Flachnut derart, daß diese mit einem Mehrfachen von zwei scharfen Kanten ausgestattet ist, was einfach dadurch erreicht wird, daß man in einer entsprechend breiten Flachnut einen oder zwei Zwischenstege im Material des Tüllenrohres stehenläßt, wodurch sich bei einem Steg eine Flachnut mit vier und bei zwei Stegen eine mit sechs scharfen Kanten ergibt.

Was den angegebenen Größenanordnungsbereich der Tiefenbemessung der Flachnut betrifft, so berücksichtigt dieser unterschiedliche Härten bzw. Elastizitäten des Schlauchmaterials, wobei die größeren Tiefen für härteres Schlauchmaterial in Frage kommen.
Für die meisten handelsüblichen Schläuche, die in etwa alle die gleiche Elastizität haben, genügen jedoch Flachnuttiefen von ca. 0,5 mm den Dichtheitsanforderungen. In diesem Zusammenhang besteht eine vorteilhafte Weiterbildung darin, daß das Tüllenrohr als separat zu fertigendes Element in die den Innenkonus aufweisende Hülse einsetzbar bzw. Einschraubbar ausgebildet ist. Ohne an der mit Innenkonus versehenen Hülse und der Schraubhülse etwas ändern zu müssen, können, abgesehen von der günstigeren Herstellung, Schlauchanschlußverschraubungen mit bezüglich der Flachnutbemessung unterschiedlichen Tüllenrohren bestückt werden; d.h., bei ansonsten gleicher Gestaltung und Bemessung kann der Hersteller und Anbieter solche Verschraubungen diese je nach eingesetztem Tüllenrohr für normalelastische und auch für begrenzt elastische, d.h. relativ harte Schläuche bereithalten und auch im Angebot entsprechend auszeichnen bzw. markieren.

Durch die erfindungsgemäße Ausbildung wird im Gegensatz zu den vorbekannten Schlauchanschlußverschraubungen im übrigen folgendes erreicht:

Die Ringfeder wird nicht einfach radial gegen das eingeschobene Schlauchende gepreßt, sondern radial sukzessive unter Axialverstellung.

Da sich der Innenkonus gegen das einzuschiebende Schlauchende öffnet bzw. zum einschraubbaren Hülsenteil hin divergiert, ist sichergestellt, daß sich im Bedarfsfall das Schlauchende komplikationslos aus der Schlauchanschlußverschraubung herausziehen läßt, da sich die Ringfeder beim Aufschrauben des Hülsenteiles im Innenkonus entspannen und nicht an diesem festkeilen kann, wie das bei den Schlauchanschlußverschraubungen der eingangs genannten Art der Fall ist.

Ganz wesentlich ist beim Ganzen die besondere Gestaltung der Flachnut, die zum einen durch ihre Breite (wird noch näher erläutert) der Axialverstellung der Ringfeder Rechnung trägt, zum anderen aber durch Scharfkantigkeit für eine Linienpressung sorgt, die, wie sich gezeigt hat, erst für die notwendige Dichtheit, insbesondere bei höheren Drücken sorgt. Die erfindungsgemäße Ausbildung der Flachnut mit ihren scharfen Kanten erfüllt also eine Doppelfunktion, nämlich die Fixierung des aufgeschobenen Schlauchendes gegen dessen axialen Abzug unter Druck, und zum anderen sorgt sie für Dichtheit durch die mindestens zwei zur Wirkung kommenden scharfen Dichtkanten, die aber nun nicht etwa allein und exponiert von innen am Schlauch zur Anlage kommen, sondern die die jeweils beiden benachbarten Flächenpressungsbereiche lediglich als Dichtlinie unterbrechen.

Am Schlauch kommt es trotz der scharfen Kanten, wie sich gezeigt hat, zu keinen Einschnitten an der Innenhaut, die sonst dazu führen können, daß sich anstehender Druck längs von Gewebeeinbindungen, mit denen Schläuche in der Regel bewehrt sind, von Einschnitten aus seinen Weg sucht, die Schlauchwandung aufbläht und schließlich den Schlauch außerhalb der Schlauchanschlußverschraubung zum Bersten bringt. Auch insoweit hat die durch Axialverstellung zu bewirkende radiale Durchmesserreduzierung der Ringfeder ihre besondere Bedeutung, da dadurch der Schlauch beim Festspannen gewissermaßen sanft an die scharfen Kanten angeschmiegt wird. Es müssen also zwar scharfe Kanten vorhanden sein, diese dürfen aber nicht exponiert aus der Mantelfläche des Tüllenrohres herausragen.

Durch die geringe Tiefe der Flachnut wird der Schlauch nur elastisch verformt und legt sich sowohl an die Nutflanken als auch an die zylindrische Umfangsfläche des Tüllenrohres an, was mit einer Minderung des im Schlauch anstehenden Drucks bis zur scharfen Kante der Flachnut und auch zur nächsten scharfen Kante verbunden ist.

Was die oben erwähnten, zur umlaufenden Dichtlinie unmittelbar benachbarten Flächenpressungsbereiche betrifft, so haben diese, was noch näher erläutert wird, Abmessungen, die kleiner gleich dem Tiefenmaß der Flachnut sind, wobei sich der eine Flächenpressungsbereich radial an der radialen Nutflanke erstreckt und der andere in der Mantelfläche des Tüllenrohres. Diese Verhältnisse müssen auch bei größer dimensionierten Schlauchanschlußverschraubungen erhalten bleiben, d.h., bei Anschlußverschraubungen für bspw. 1 1/2"-Schläuche vergrößert sich die Tiefe der Flachnut im Vergleich zu 1/2"-Schläuchen nicht etwa linear um das Dreifache, sondern die Tiefe bleibt im wesentlichen gleich, wobei der zylindrische Nutboden gewissermaßen eine Anschlagbegrenzung für die Eintiefungsdeformation des Schlauches in die Nut bildet, die verhindert, daß die Schlauchinnenwand von den scharfen Dichtkanten angeschnitten werden kann, die sonst, wäre die Nuttiefe größer, regelrecht als Stanzkanten wirken würden.

Die erfindungsgemäße Schlauchanschlußverschraubung und deren vorteilhafte Weiterbildungen werden nachfolgend anhand der zeichnerischen Darstellung von Ausführungsbeispielen näher erläutert.

Es zeigt
- Fig. 1: je zur Hälfte im Schnitt und Ansicht die Hülse der Schlauchanschlußverschraubung;
- Fig. 2: je zur Hälfte in Schnitt und Ansicht die Spannhülse der Schlauchanschlußverschraubung;
- Fig. 3: je zur Hälfte in Schnitt und Ansicht die Teile gemäß Fig. 1 und 2 im zusammengefügten Zustand;
- Fig. 3A: je zur Hälfte im Schnitt und in Seitenansicht eine besondere Ausführungsform des Tüllenrohres;
- Fig. 4: stark vergrößert den "Spannbereich" der Schlauchtülle;
- Fig.5A,B: die Ringfeder in Stellung gemäß Fig. 4 (5A) und im Spannzustand (Fig. 5B);
- Fig.6A-C: in extremer Vergrößerung und schematisch den Wirkbereich von Ringfeder und Flachnut;
- Fig. 7: schematisch eine weitere Ausführungsform und
- Fig. 8: schematisch eine weitere besondere Ausführungsform.

Die Schlauchanschlußverschraubung besteht, wie bisher auch schon, aus einem in ein Schlauchende einsteckbarem Tüllenrohr 1, dessen tüllenanschlußseitiger Endbereich 1' konzentrisch mit einer einen Teil einer Schlaucheinschubringnut 3 begrenzenden Hülse 4 umgeben ist, und aus einem mit dieser Hülse 4 verschraubbaren Schraubhülse 2, die zusammen mit der Hülse 4 und dem Tüllenrohr 1 die ringzylindrische Schlaucheinschubnut 3 begrenzt, wobei in einem von einem Innenkonus 8 begrenzten Freiraum zwischen Hülse 4 und Schraubhülse 2 im Bereich gegenüber mindestens einer umlaufenden Flachnut 10 am Tüllenrohr die mindestens eine Ringfeder 5 angeordnet ist.

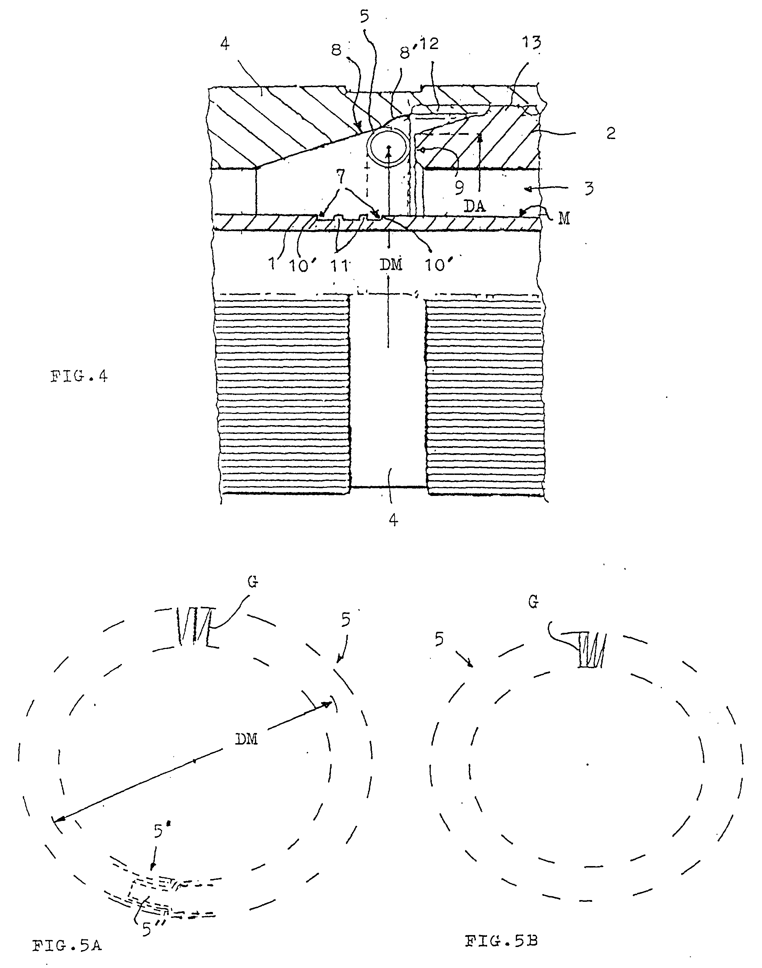

Für eine solche Schlauchanschlußverschraubung ist nun unter Verweis auf insbesondere Fig. 4 folgendes wesentlich:
Der Innenkonus 8 ist in der das Tüllenrohr 1 umgebenden Hülse 4 sich gegen das einzuschiebende Schlauchende hin öffnend angeordnet. Das schraubendruckfederseitige Ende der in die Hülse 4 des Tüllenrohres 1 einschraubbaren Schraubhülse 2 weist eine radial erstreckte, ringförmige Widerlagerfläche 9 auf, deren Außendurchmesser DA etwa dem mittleren Durchmesser DM der radial unverspannten Ringfeder 5 entspricht. Ferner sind an der im axialen Verstellbereich der Ringfeder 5 am Tüllenrohr 1 angeordneten, eine Tiefe im Bereich von 0,2 bis 0,8 mm, vorzugsweise 0,5 mm aufweisenden Flachnut 10 durch mindestens zwei im wesentlichen senkrecht zur Mantelfläche M des Tüllenrohres 1 orientierte Nutflanken 7 mindestens zwei scharfe Kanten 10' derart zueinander distanziert angeordnet und ausgebildet, daß diese mindestens zwei scharfen Kanten 10' bei in Spannstellung befindlicher Ringfeder 5 die Elemente zur Erzeugung der Linienpressung am Schlauch bilden.

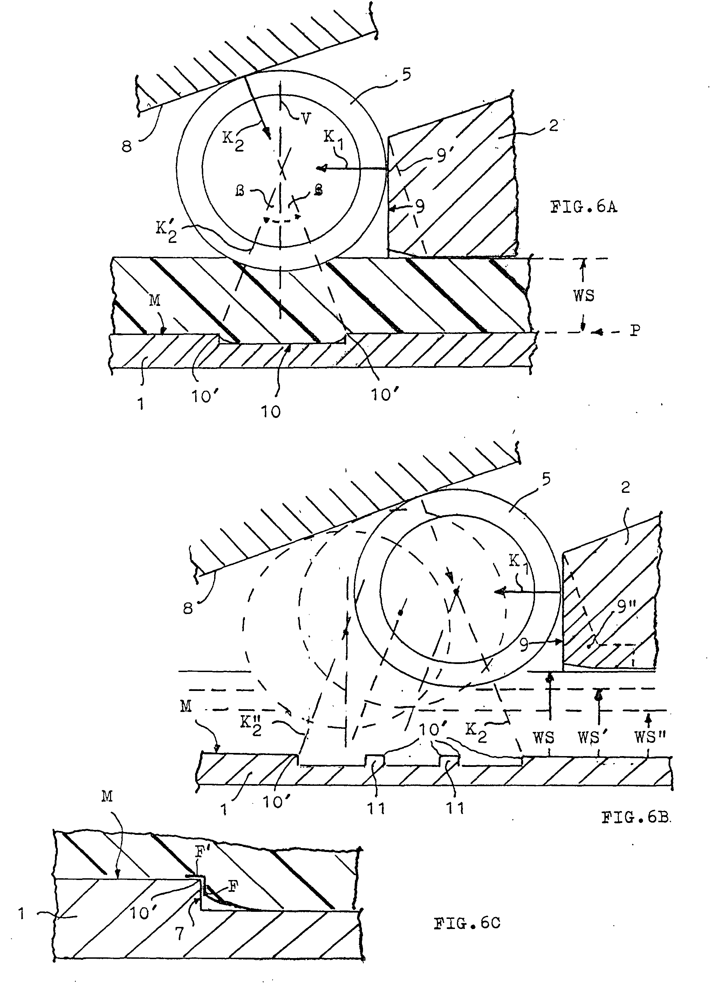

Was die notwendige Breite der Flachnut 10 bzw. den Abstand der diese begrenzenden scharfen Kanten 10' betrifft, so wird hierzu auf die Fig. 6A, B verwiesen, wobei auf die vorerwähnten Fälle Bezug genommen wird, und zwar zum einen auf den Fall, bei dem bei vorgegebener Wandstärke des Schlauches von einer im wesentlichen definierten Anpreßstelle der Ringfeder 5 ausgegangen werden kann und zum anderen - was häufiger der Fall sein wird - auf den Fall, bei dem die Anpreßstelle nicht von vornherein festzulegen ist.

Fig. 6A verdeutlicht den ersten Fall, und zwar extrem vergrößert. Da die Ringfeder 5 via Horizontalkomponente K₁ gegen den Innenkonus 8 gedrückt wird, ergibt sich eine wirksame Senkrechtkomponente K₂ zum Innenkonus 8, welche Komponente K₂ mit der Vertikalen V zum Tüllenrohr 1 einen Winkel β einschließt. Im Schnittpunkt dieser Komponente K₂ mit dem Mantel M des Tüllenrohres 1 ist die vordere scharfe Kante der Flachnut 10 am Tüllenrohr anzuordnen, während sich die Position der zweiten scharfen Kante einfach durch eine Schnittlinie K'₂ ergibt, die sich ebenfalls unter einem Winkel β auf der anderen Seite der Vertikalen V erstreckt.

Fig. 6B, ebenfalls extrem vergrößert, verdeutlicht den zweiten Fall, wobei auch unterschiedliche Wandstärken WS, WS', WS" von Schläuchen mit angedeutet sind und auch mögliche unterschiedliche Axialpositionen der Ringfeder 5 für die jeweiligen Wandstärken. Dieser ganze axiale Verstellbereich muß also mit Rücksicht auf die beiden Extremalpositionen und alle Zwischenstellungen so mit scharfen Kanten versehen sein, daß immer zwei scharfe Kanten auch in diesem Fall im wesentlichen im Sinne der Fig. 6A wirksam werden, d.h., die Gesamtbreite der Flachnut ergibt sich hier durch die Schnittpunkte der Linien K₂ und K₂" mit dem Mantel M des Tüllenrohres 1, wobei aber hier die Flachnut durch mindestens einen in bezug auf die Gesamtbreite relativ schmalen Zwischensteg 11 gegliedert wird, so daß bei Anordnung von einem Zwischensteg 11 insgesamt vier scharfe Kanten und bei ggf. zwei Zwischenstegen 11, wie dargestellt, insgesamt sechs scharfe Kanten zur Erzeugung von Linienpressungen verfügbar sind, von denen aber, positionsabhängig im wesentlichen immer nur zwei wirksam werden. Dabei kann durchaus der Fall eintreten, daß die beiden scharfen Kanten eines Zwischensteges 11 zur Wirkung kommen.

Fig. 6C zeigt, ebenfalls extrem vergrößert, die Anpreßverhältnisse, wie sie an einer scharfen Kante 10' vorliegen, wobei darauf hinzuweisen ist, daß die tatsächlichen Abmessungen im Bereich von zehntel Millimetern liegen. Diese Darstellung macht deutlich, daß die radiale Anpreßfläche F und die axiale Anpreßfläche F' von der umlaufenden, durch die scharfe Kante 10' gebildeten Linienpressung unterbrochen werden.

Die Ringfeder 5 ist vergrößert in Fig. 5A, B dargestellt, aus denen sich ergibt, daß es sich zwingend um eine Druckfeder handeln muß, um die Ringfeder 5 im Durchmesser reduzieren zu können (Fig. 5B), wobei sich die Steigung der Federgänge G ebenfalls entsprechend reduziert. Vorteilhaft weist die Ringfeder 5 an einem Ende einen durchmesserreduzierten, in den anderen Endbereichen 5' passend einsteck- oder einschraubbaren Endbereich 5" auf, wie dies unten in Fig. 5A verdeutlicht ist. Dadurch wird eine nahezu nahtlose Verbindungsstelle an der Ringfeder 5 gewährleistet.

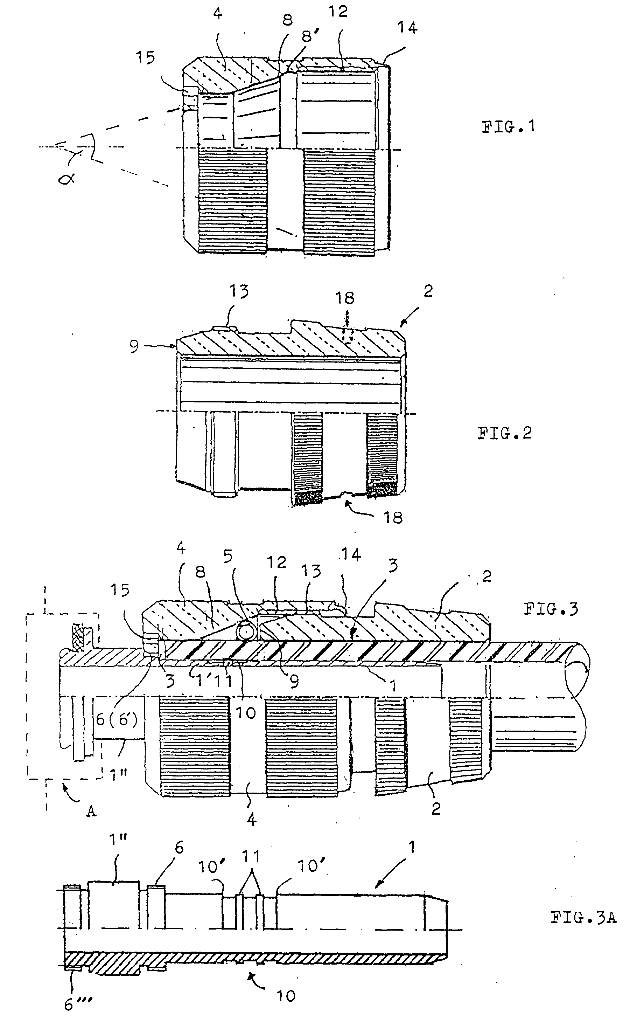

Wie aus Fig. 1 ersichtlich, endet der Innenkonus 8 mit seinem Größtdurchmesser an einem Innengewinde 12 der Hülse 4, dem an der Schraubhülse 2 ein Außengewinde 13 zugeordnet ist. Bei dieser Ausbildung und Zuordnung von Hülse 4 und Schraubhülse 2 treten also im zusammengefügten Zustand gemäß Fig. 3 keine Gewindegänge nach außen in Erscheinung. Der durch Drehen der Schraubhülse 2 bewirkte Spannvorgang bzw. die radiale Durchmesserreduzierung der Ringfeder 5 wird also durch Axialverstellung bewirkt, was zu einer "sanften" Deformation bzw. Zusammenpressung des einzuspannenden Schlauchendes am Tüllenrohr 1 führt, und insofern werden die betroffenen Schlauchflächen auch entsprechend sanft an die scharfen Kanten 10' angelegt.

Als vorteilhaft hat sich unter Verweis auf Fig. 1 und 4 die Anordnung einer umlaufenden, der Kontur der Ringfeder 5 angepaßten Hohlkehle 8' am Ende des Innenkonus 8 erwiesen, die gewissermaßen die "Nullstellung" der Ringfeder 5 definiert, dieser einen sicheren Sitz vermittelt und gewährleistet, daß die Ringfeder 5 beim Einschieben des Schlauchendes nicht aus ihrer Nullstellung herausgedrückt wird, was ggf. dann eintreten kann, wenn das Schlauchende bzw. der Schlauch durch Lagerung im Querschnitt verformt worden ist.

Da das Schlauchende auch bei locker aufgeschraubtem Hülsenteil 2 problemlos in die ring-zylindrische Schlaucheinschubnut 3 eingeschoben werden kann, ist die Hülse 4 vorteilhaft mit einem Bördelrand 14 (Fig. 1) versehen, der im umgebördelten Zustand (siehe Fig. 3) Hülse 4 und Schraubhülse 2 drehbar aber unlösbar als Einheit zusammenhält, womit vorteilhaft sichergestellt ist, daß unter ungünstigen Umständen die Ringfeder 5 nicht verlorengehen kann.

Da es bei Schlauchanschlußverschraubungen, bei denen es sich ja praktisch um Massenartikel handelt, auch entscheidend um eine kostengünstige und einfache Fertigung geht, aber auch mit Rücksicht darauf, wie vorerwähnt, unter Beibehaltung ansonsten aller Teile, Tüllenrohre 1 mit anderen Flachnutabmessungen vorsehen zu können, ist gemäß Fig. 3 das Tüllenrohre 1 als separates Teil einschraubbar mit der Hülse 4 verbunden, was insofern eine vorteilhafte Weiterbildung darstellt, als der Aufschub des Schlauchendes auf das Tüllenrohr 1 keinerlei Zwangsdrehungen in der einen oder anderen Richtung verlangt, wodurch ein eingeschraubtes Tüllenrohr 1 ggf. gelockert werden könnte. Wie Hülse 4 und Hülsenteil 2 kann also auch das Tüllenrohr 1 mit seinem Einschraubgewinde 6 für das Gegengewinse 6' an der Hülse 4 automatengefertigt hergestellt werden, abgesehen davon, daß dadurch ein entsprechender Anschlußadapter A (siehe Fig. 3) problemlos mit montiert werden kann. Vor dem Einschrauben des Tüllenrohres 1 werden die Gewinde 6, 6' trotzdem und zweckmäßig mit heute verfügbaren Klebern festsitzend verbunden. In diesem Zusammenhang besteht, wie in Fig. 3A dargestellt, eine vorteilhafte Weiterbildung darin, daß am aus der Hülse 4 herausragenden Anschlußteil 1" des Tüllenrohres 1 ein Außengewinde 6''' angeordnet ist. Abgesehen davon, daß dadurch bei der Herstellung des Tüllenrohres 1 bspw. im Vergleich zur Ausführungsform gemäß Fig. 3 weniger Materialverschnitt entsteht, können auf das Gewinde 6''' alle möglichen Formen von hier nicht dargestellten Anschlußelementen aufgeschraubt werden.

Was nun die äußerst wichtige druckdichte Festlegung des Schlauchendes am Tüllenrohr 1 betrifft, so wird nochmals auf die Fig. 6A, B, C verwiesen. Da, wie erkennbar, dank der geringen Tiefe der Flachnut 10, der Schlauch vor der ersten (rechten) kante 10' flach anliegt und auch dort noch stärker angepreßt wird als noch weiter rechts von der Druckseite P her, also außerhalb des Wirkbereiches der Ringfeder 5, ist dies schon mit einer gewissen Druckminderung bis zur scharfen Kante 10' verbunden, die dann selbst für die eigentliche Abdichtung längs ihrer gesamten Umfangslinie sorgt.

Bei einem Tüllenrohr 1 für einen 3/4"-Schlauch hat eine mit zwei Zwischenstegen 11 gegliederte Flachnut 10 eine Gesamtbreite von ca. nur 6,5 mm, die Zwischenstege 11 haben eine Breite von ca. 1 mm und die Tiefe der Flachnut 10 beträgt ebenfalls nur 0,4 mm. Wie sich gezeigt hat, sind damit sogar Drücke bis 40 bar beherrschbar. Die Zwischenstege 11 haben dabei im übrigen den gleichen Außendurchmesser wie das Tüllenrohr 1, was ja wesentlich ist, um einerseits dem geforderten, praktisch kraftlosen Aufschub und auch Abzug des Schlauchendes zu genügen und um andererseits keine exponiert über die zylindrische Mantelfläche des Tüllenrohres 1 herausragenden Kanten entstehen zu lassen, die die Innenwand des Schlauches beschädigen könnten.

Um den axialen Verstellweg der Spannhülse 6 so kurz wie möglich aber so lang wie nötig zu halten, hat sich ein Öffnungswinkel α (siehe Fig. 1) des Innenkonus 8 der Hülse 4 von 40° als am günstigsten erwiesen.

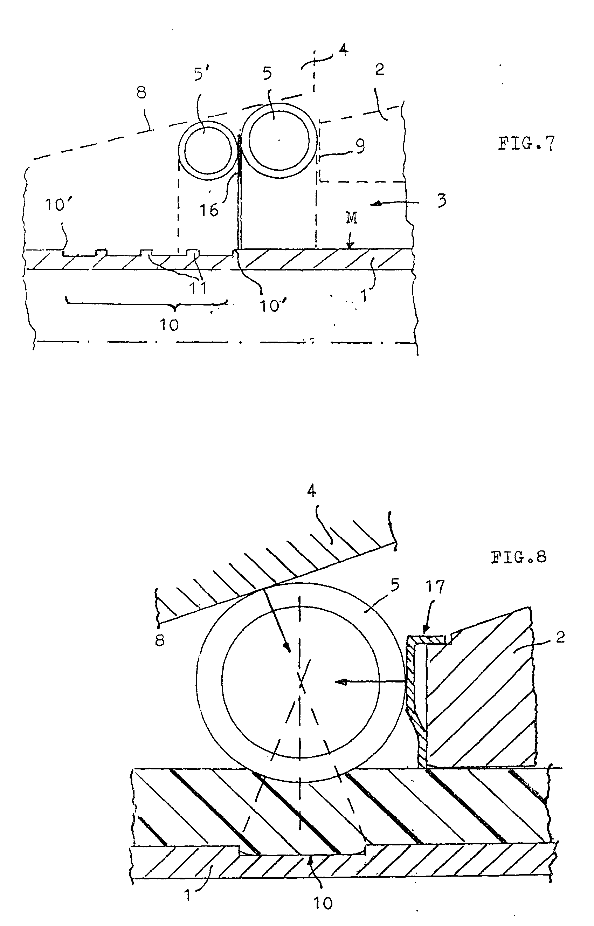

Um sogar über bspw. 40 bar liegenden Druckbelastungen mit Sicherheit genügen zu können, hat es sich im übrigen als vorteilhaft erwiesen, gemäß Fig. 7 ggf. zwei Ringfedern 5, 5' vorzusehen, wobei zwischen den beiden Federn ein Trennring 16 angeordnet und der Federdurchmesser der zweiten Ringfeder bei gleichem Innendurchmesser entsprechend seiner Anlage am Innenkonus 8 reduziert bemessen ist.

Eine vorteilhafte Weiterbildung besteht darin (siehe Fig. 1, 3), daß in der Stirnwand 4' der Hülse 4 eine den Hülseninnenraum anschneidende Druckentlastungsbohrung 15 angeordnet ist. Bei sich evtl. schlagartig einstellendem hohen Druck bläht sich nämlich der eingesetzte Schlauch von der Zuströmseite her auf und legt sich ebenfalls schlagartig von da aus fortschreitend bis zur Ringfeder 5 an die Innenwand der Schraubhülse 2 an, was zu einer Kompression der eingeschlossenen Luft auf der anderen Seite der Ringfeder 5 führt und unter ungünstigen Umständen zu einem Lösen der ganzen Schlauchanschlußverschraubung vom Schlauch führen kann, was aber durch die Druckentlastungsbohrung 15 verhindert wird.

In Fig. 8 ist schließlich eine weitere, besondere Ausführungsform dargestellt, bei der zwischen Ringfeder 5 und Widerlagerfläche 9 der Schraubhülse 2 ein weiteres Federelement 17 angeordnet ist, das in axialer Richtung wirkt, d.h. dafür kommt bspw. eine Ringtellerfeder in Betracht. Hierbei handelt es sich insofern um ein Sicherheitselement mit folgender Funktion:
Falls sich unter ungünstigen äußeren Umständen, bspw. Erwärmung, die Elastizität des Schlauchmaterials ändert, hätte dies ggf. indirekt ein Nachlassen der Spannkraft der Ringfeder 5 zur Folge. Da das zusätzlich eingesetzte Federelement 17 beim Festspannen der Ringfeder 5 mit verspannt wird, sorgt in solchen
Fällen das Federelement 17 dann automatisch für ein Nachspannen der Ringfeder.
Bezüglich zweier besonderer Ausführungsformen wird nochmals auf die Fig. 6 A,B bezuggenommen.
Gemäß Fig.6A kann, wie gestrichelt angedeutet, die Widerlagerfläche 9'auch schwach im Sinne der Darstellung, d.h., etwa senkrecht zum Innenkonus 8 geneigt zur Vertikalen V ausgebildet werden, was dazu führt, daß die Komponente K1 entsprechend nach unten gegen den Schlauch bzw. das Tüllenrohr 1 geneigt orientiert wird.
Gemäß Fig. 6B kann ferner die Widerlagerfläche 9 - egal ob diese nun, wie ausgezogen dargestellt, senkrecht zum Tüllenrohr 1 steht oder geneigt, wie in Fig.6A gestrichelt verdeutlicht,- auch als separater Ring 9" der Schraubhülse 2 drehbar zugeordnet sein, wodurch die Schraubdrehung der Schraubhülse 2 beim Festdrehen der ganzen Anschlußverschraubung in Bezug auf die Ringfeder 2 erleichtert bzw. relativiert wird.
Um im Bedarfsfall beim Festspannen oder Lösen der Schraubhülse 2 größere Drehkräfte aufbringen zu können, sind unter Verweis auf Fig. 2 an der Schraubhülse 2 für den Ansatz von entsprechend angepaßt ausgebildeten Hilfsdrehelementen( nicht dargestellt ) vor - teilhaft Ansatzhilfsmittel 18 , wie Bohrungen, Schlitze od. dgl. vorgesehen.

## Patentansprüche

1. Schlauchanschlußverschraubung, bestehend aus einem in ein Schlauchende einsteckbares Tüllenrohr (1), dessen tüllenanschlußseitiger Endbereich (1') konzentrisch mit einer einen Teil einer Schlaucheinschubringnut (3) begrenzenden Hülse (4) umgeben ist, und aus einem mit dieser Hülse (4) verschraubbaren Schraubhülse (2), die zusammen mit der Hülse (4) und dem Tüllenrohr (1) die ringzylindrische Schlaucheinschubnut (3) begrenzt, wobei in einem von einem Innenkonus (8) begrenzten Freiraum zwischen Hülse (4) und Schraubhülse (2) im Bereich gegenüber mindestens einer umlaufenden Flachnut (10) am Tüllenrohr (1) mindestens eine Ringfeder (5) angeordnet ist und das Tüllenrohr (1) mit einem Anschlußteil (1") die Hülse (4) überragt,
**dadurch gekennzeichnet,**
**daß** der Innenkonus (8) in der das Tüllenrohr (1) umgebenden Hülse (4) sich gegen das einzuschiebende Schlauchende hin öffnend angeordnet ist,
**daß** das schraubendruckfederseitige Ende der in die Hülse (4) des Tüllenrohres (1) einschraubbaren Schraubhülse (2) eine radial erstreckte, ringförmige Widerlagerfläche (9) aufweist, deren Außendurchmesser (DA) etwas größer als der mittlere Durchmesser (DM) der radial unverspannten Ringfeder (5) bemessen ist,
**daß** an der im axialen Verstellbereich der Ringfeder (5) am Tüllenrohr (1) angeordneten, eine Tiefe im Bereich von 0,2 bis 0,8 mm, vorzugsweise 0,5 mm aufweisenden Flachnut (10) durch mindestens zwei im wesentlichen senkrecht zur Mantelfläche (M) des Tüllenrohres (1) orientierte Nutflanken (F') mindestens zwei scharfe Kanten (10') derart zueinander distanziert angeordnet und ausgebildet sind, daß diese mindestens zwei scharfen Kanten (10') bei in Spannstellung befindlicher Ringfeder (5) die Elemente zur Erzeugung der Linienpressung am Schlauch bilden.

2. Schlauchanschlußverschraubung nach Anspruch 1,
**dadurch gekennzeichnet,**
**daß** zur Ausbildung von einem Mehrfachen als zwei scharfen Kanten (10') in der Flachnut (10) mindestens ein ebenfalls zwei scharfe Kanten (11') aufweisender Zwischensteg (11) angeordnet ist, dessen Außendurchmesser dem der Mantelfläche (M) des Tüllenrohres (1) entspricht.

3. Schlauchanschlußverschraubung nach Anspruch 1 oder 2,
**dadurch gekennzeichnet,**
**daß** am einschubseitigen Ende des Innenkonus (8) eine der Umfangskontur der Ringfeder (5) angepaßte Hohlkehle (8') angeordnet ist.

4. Schlauchanschlußverschraubung nach einem der Ansprüche 1 bis 3,
**dadurch gekennzeichnet,**
**daß** die Ringfeder (5) im in bezug auf den Schlauch ungespannten Zustand in sich vorgespannt im Innenkonus (8) angeordnet ist.

5. Schlauchanschlußverschraubung nach einem der Ansprüche 1 bis 4,
**dadurch gekennzeichnet,**
**daß** die Ringfeder (5) an einem Ende einen durchmesserreduzierten, in den anderen Endbereich (5') passend einsteck- oder einschraubbaren Endbereich (5") aufweist.

6. Schlauchanschlußverschraubung nach einem der Ansprüche 1 bis 5,
**daduch gekennzeichnet,**
daß bei Anordnung von zwei Ringfedern (5) im Innenkonus (8) zwischen den beiden Federn ein Trennring (16) angeordnet und der Federdurchmesser (D") der zweiten Feder bei gleichem Innendurchmesser entsprechend seiner Anlage am Innenkonus (8) reduziert bemessen ist.

7. Schlauchanschlußverschraubung nach einem der Ansprüche 1 bis 6,
**dadurch gekennzeichnet,**
**daß** in der Stirnfläche (4') der Hülse (4) eine den Hülseninnenraum anschneidende Druckentlastungsbohrung (15) angeordnet ist.

8. Schlauchanschlußverschraubung nach einem der Ansprüche 1 bis 7,
**dadurch gekennzeichnet,**
**daß** das Tüllenrohr (1) als separates Teil einschraubbar mit der Hülse (4) verbunden ist.

9. Schlauchanschlußverschraubung nach Anspruch 8,
**dadurch gekennzeichnet,**
**daß** am aus der Hülse (4) herausragendem Anschlußteil (1") des Tüllenrohres (1) ein Außengewinde (6''') angeordnet ist.

10. Schlauchanschlußverschraubung nach einem der Ansprüche 1 bis 9,
**dadurch gekennzeichnet,**
**daß** die Hülse (4) mit einem spannhülsenseitigen Bördelrand (14) das in die Hülse (4) eingeschraubte Außengewinde (13) der Schraubhülse (2) hintergreift.

11. Schlauchanschlußverschraubung nach einem der Ansprüche 1 bis 10,
**dadurch gekennzeichnet,**
**daß** zwischen der Widerlagerfläche (9) der Hülse (2) und der Ringfeder (5) ein ringförmiges Federelement (17), wie Tellerfeder, angeordnet ist.

12. Schlauchanschlußverschraubung nach einem der Ansprüche 1 bis 11,
**dadurch gekennzeichnet,**
**daß** die Widerlagerfläche(9') in Bezug auf die Vertikale(V) geneigt angeordnet ist und den Innenkonus(8) im wesentlichen senkrecht schneidet.

13. Schlauchanschlußverschraubung nach einem der Ansprüche 1 bis 12,
**dadurch gekennzeichnet,**
**daß** die Widerlagerfläche (9 ) als separater Ring(9") an der Schraubhülse(2) angeordnet und drehbar gelagert ist.

14. Schlauchanschlußverschraubung nach einem der Ansprüche 1 bis 13,
**dadurch gekennzeichnet,**
**daß** an der Schraubhülse(2) Ansatzhilfsmittel(18), wie Bohrungen, Schlitze, für an der Schraubhülse(2) anzusetzende Hilfsdrehelemente angeordnet sind.

## Claims

1. A threaded hose connector comprising a nozzle tube (1) adapted to be plugged into a hose end, with the nozzle-connection-sided end area (1') of the said nozzle tube (1) being concentrically surrounded by a sleeve (4) confining a part of a hose-inserting annular groove (3), and further comprising a threaded sleeve (2) adapted to be screwed to the said sleeve (4), with the said threaded sleeve (2) together with the sleeve (4) and the nozzle tube (1) confining the ring-cylindrical hose-inserting groove (3), wherein at least one annular spring (5) is provided in a free space confined by an internal cone (8) and formed between sleeve (4) and threaded sleeve (2) in the area opposite at least one flat groove (10) on the nozzle tube (1), with the said nozzle tube (1) with one connecting part (1") protruding beyond sleeve (4),
**characterized in that** the internal cone (8) is disposed in the sleeve (4) surrounding the nozzle tube (1) in a manner opening toward the hose end to be inserted into the nozzle tube (1),
that the annular spring-sided end of the threaded sleeve (2) screwed into the sleeve (4) of the nozzle tube (1) comprises a radially extending annular abutment surface (9) the outer diameter (DA) of which is dimensioned slightly larger than the central diameter (DM) of the radially unloaded annular spring (5),
that arranged in spaced relationship and formed on the flat groove (10) disposed in the axial adjustment area of the annular spring (5) on the nozzle tube (1) and being of a depth in the range of between 0.2 and 0.8 mm, preferably 0.5 mm, through at least two groove flanks (F') extending in a direction perpendicular to the cylindrical surface (M) of the nozzle tube (1), are at least two sharp edges (10') in such a way that the said at least two sharp edges (10'), with the annular spring (5) in the clamping position, form the elements for generating the line compression on the hose.

2. A threaded hose connector according to claim 1,
**characterized in that**, for forming more than two sharp edges (10') in the flat groove (10) at least one intermediate web (11) is provided which equally comprises two sharp edges (11') and whose outer diameter corresponds to the one of the cylindrical surface (M) of the nozzle tube (1).

3. A threaded hose connector according to claims 1 or 2,
**characterized in that** a fillet (8') conforming to the circumferential contour of the annular spring (5) is arranged on the insertion-sided end of the internal one (8).

4. A threaded hose connector according to any one of claims 1 through 3,
**characterized in that** the annular spring (5) in a condition unloaded relative to the hose is disposed, inherently loaded, within the internal cone (8).

5. A threaded hose connector according to any one of claims 1 through 4,
**characterized in that** the annular spring (5), on one end thereof, has an end area (5") of reduced diameter plugged into or screwed onto the other end area (5') to fit therein.

6. A threaded hose connector according to any one of claims 1 through 5,
**characterized in that**, with two annular springs (5) arranged in the internal cone (8), a separating ring (16) is provided between the two springs, and that the spring diameter (D") of the second spring being of the same internal diameter, is reduced in accordance with the abutment thereof on the internal cone (8).

7. A threaded hose connector according to any one of claims 1 through 6,
**characterized in that** arranged in the front face (4') of the sleeve (4), is a pressure relief bore (15) cutting the sleeve interior.

8. A threaded hose connector according to any one of claims 1 through 7,
**characterized in that** the nozzle tube (1) being screwed thereinto is connected to the sleeve (4).

9. A threaded connector according to claim 8,
**characterized in that** an external thread (6"') is provided on the connecting part (1") of the nozzle tube (1) protruding from the sleeve (4).

10. A threaded hose connector according to any one of claims 1 through 9,
**characterized in that** the sleeve (4), with a flanged edge (14) on the side of the load sleeve, undercuts the outer thread (13) of the threaded sleeve (2) screwed into sleeve (4).

11. A threaded hose connector according to any one of claims 1 through 10,
**characterized in that** an annular spring element (17), such as a Belleville spring, is provided between the abutment surface (9) of the sleeve (2) and the annular spring (5).

12. A threaded hose connector according to any one of claims 1 through 11,
**characterized in that** the abutment surface (9') relative to the vertical line (V) is arranged at an inclination, intersecting the internal cone (8) in a direction substantially perpendicular.

13. A threaded hose connector according to any one of claims 1 through 12,
**characterized in that** the abutment surface (9) is pivotally arranged in the form of a separate ring (9") on the threaded sleeve (2).

14. A threaded hose connector according to any one of claims 1 through 13,
**characterized in that** arranged on the threaded sleeve 82) are mounting aids (18), such as bores or slots, for auxiliary rotary elements to be mounted on the threaded sleeve (2).

## Revendications

1. Vissage de raccord de tuyau constitué par un tube à douille (1) qui peut être emboîté dans une extrémité de tuyau dont la zone d'extrémité située du côté du raccord de douille (1') est entourée concentriquement par un manchon (4) qui délimite une partie d'une rainure annulaire d'insertion de tuyau (3) et par un manchon à visser (2) qui peut être vissé avec ce manchon (4), qui délimite ensemble avec le manchon (4) et le tube à douille (1) la rainure d'insertion de tuyau (3) cylindrique en anneau, au moins un anneau-ressort (5) étant placé dans un espace libre délimité par un cône intérieur (8) entre le manchon (4) et le manchon à visser (2) dans la zone en face d'au moins une rainure plate périphérique (10) sur le tube à douille (1) et le tube à douille (1) dépassant le mahcon (4) avec une pièce de raccord (1"),
**caractérisé en ce**
**que** le cône intérieur (8) est placé dans le manchon (4) qui entoure le tube à douille (1) en s'ouvrant vers l'extrémité de tuyau à insérer,
**que** l'extrémité du côté du ressort de compression à visser du manchon à visser (2) qui peut être vissé dans le manchon (4) du tube à douille (1) présente une surface de contrefort annulaire (9) étendue radialement dont le diamètre extérieur (DA) est dimensionné un peu plus grand que le diamètre moyen (DM) de l'anneau-ressort (5) non contraint dans le sens radial,
**que**, sur la rainure plate (10) placée dans la zone d'ajustage axial de l'anneau-ressort (5) sur le tube à douille (1) qui présente une profondeur de l'ordre de 0,2 à 0,8 mm, de préférence de 0,5 mm, au moins deux arêtes vives (10') sont placées et configurées à une certaine distance l'une de l'autre par au moins deux flancs de rainure (F') orientés substantiellement perpendiculairement par rapport à la surface latérale (M) du tube à douille (1), que ces arêtes vives (10'), qui sont au moins au nombre de deux, forment, lorsque l'anneau-ressort (5) se trouve en position de contrainte, les éléments pour produire la pression de ligne sur le tuyau.

2. Vissage de raccord de tuyau selon la revendication 1,
**caractérisé en ce**
**que**, pour configurer un multiple de deux arêtes vives (10') dans la rainure plate (10), il est placé au moins une entretoise intermédiaire (11) qui présente également deux arêtes vives (11'), entretoise dont le diamètre extérieur correspond à la surface latérale (M) du tube à douille (1).

3. Vissage de raccord de tuyau selon la revendication 1 ou 2,
**caractérisé en ce**
**qu'**une gorge creuse (8') adaptée au contour périphérique de l'anneau-ressort (5) est placée à l'extrémité côté insertion du cône intérieur (8).

4. Vissage de raccord de tuyau selon l'une des revendications 1 à 3,
**caractérisé en ce**
**que** l'anneau-resort (5) est placé dans le cône intérieur (8) précontraint en soi dans l'état non contraint par rapport au tuyau.

5. Vissage de raccord de tuyau selon l'une des revendications 1 à 4,
**caractérisé en ce**
**que** l'anneau-ressort (5) présente à une extrémité une zone d'extrémité de diamètre réduit (5") qui peut être emboîtée ou vissée de manière ajustée dans l'autre zone d'extrémité (5").

6. Vissage de raccord de tuyau selon l'une des revendications 1 à 5,
**caractérisé en ce**
**que**, lors de la disposition de deux anneaux-ressorts (5) dans le cône intérieur (8), un anneau de séparation (16) est placé entre les deux ressorts et le diamètre (D") du second ressort est dimensionné réduit pour le même diamètre intérieur de manière correspondante à sa position contre le cône intérieur (8).

7. Vissage de raccord de tuyau selon l'une des revendications 1 à 6,
**caractérisé en ce**
**qu'**une forure de décompression (15), qui encoche l'intérieur du manchon, est placée dans la face frontale (4') du manchon (4).

8. Vissage de raccord de tuyau selon l'une des revendications 1 à 7,
**caractérisé en ce**
**que** le tube à douille (1) est relié comme pièce séparée pouvant être vissée avec le manchon (4).

9. Vissage de raccord de tuyau selon la revendication 8,
**caractérisé en ce**
**qu'**un filet extérieur (6''') est placé sur la pièce de raccord (1") du tube à douille (1), pièce qui sort du manchon (4).

10. Vissage de raccord de tuyau selon l'une des revendications 1 à 9,
**caractérisé en ce**
**que** le manchon (4) saisit le filet extérieur (13) du manchon à visser (2), filet qui est vissé dans le manchon (4), par derrière avec un bord rabattu (14) du côté du manchon de serrage.

11. Vissage de raccord de tuyau selon l'une des revendications 1 à 10,
**caractérisé en ce**
**qu'**un élément-ressort annulaire (17), comme une rondelle-ressort, est placé entre la surface de contrefort (9) du manchon (2) et l'anneau-ressort (5).

12. Vissage de raccord de tuyau selon l'une des revendications 1 à 11,
**caractérisé en ce**
**que** la surface de contrefort (9') est placée inclinée par rapport à la verticale (V) et coupe le cône intérieur (8) substantiellement perpendiculairement.

13. Vissage de raccord de tuyau selon l'une des revendications 1 à 12,
**caractérisé en ce**
**que** la surface de contrefort (9) est placée comme un anneau séparé (9") sur le manchon à visser (2) et est positionnée rotative.

14. Vissage de raccord de tuyau selon l'une des revendications 1 à 13,
**caractérisé en ce**
**que** des moyens auxiliaires pour la mise en place (18) comme des forures, des fentes pour les éléments à tourner auxiliaires à mettre en place sur le manchon à visser (2) sont placés sur le manchon à visser (2).
